# EUROPEAN PATENT SPECIFICATION

(11) **EP 2 350 703 B1**
(45) Date of publication and mention of the grant of the patent: **29.06.2016**
(21) Application number: 08878372.5
(22) Date of filing: 27.11.2008
(51) Int. Cl.: G01W 1/08, B64B 1/58, B64F 1/00

(54) **ARRANGEMENT FOR A METEOROLOGICAL BALLOON LAUNCHER AND METHOD FOR LAUNCHING METEOROLOGICAL BALLOONS**
ANORDNUNG FÜR EINE STARTVORRICHTUNG METEOROLOGISCHER BALLONS UND VERFAHREN ZUM STARTEN VON METEOROLOGISCHEN BALLONS
AGENCEMENT DE LANCEUR DE BALLON MÉTÉOROLOGIQUE ET PROCÉDÉ DE LANCEMENT DE BALLONS MÉTÉOROLOGIQUES

(43) Date of publication of application: 03.08.2011
(73) Proprietor: VAISALA OYJ, 00421 Vantaa (FI)
(72) Inventor: JAUHIAINEN, Hannu, FI-01670 Vantaa (FI)
(74) Representative: Seppo Laine Oy
(86) International application number: PCT/FI2008/050694
(87) International publication number: WO 2010/061034

(56) References cited:
- AU-A1- 2003 204 345
- US-A- 5 850 988
- US-A- 5 850 988
- US-A- 5 884 862
- US-A1- 2005 006 523
- US-A1- 2005 006 523

## Description

### Field of the invention

The present invention relates to meteorological-balloon launchers. The invention particularly relates to a meteorological-balloon launcher, by means of which several different types of meteorological balloons can be launched. More specifically, the invention relates to an arrangement for a launcher, according to Claim 1.

In addition, the invention relates to a method for launching meteorological balloons. The invention particularly relates to the launch of several different types of meteorological balloons from a single type of launcher. More specifically, the invention relates to a method, according to Claim 9, for launching meteorological balloons.

### Prior art

As is known, meteorological balloons, and radiosondes attached to them by a cord, for measuring weather conditions, are launched using launchers, which have been developed from manned launching stations into automatic launchers, into which several balloons and radiosondes can be loaded for several days' unmanned operation. The launchers traditionally comprise a service room for the preparation of the meteorological balloons and radiosondes, a store for storing them, and a release chamber for launching them while protected from disturbing factors in the environment. Solutions are known, in which the meteorological balloons and radiosondes to be launched are loaded into an array of launch modules, from which they can be launched one at a time. A launcher of the kind described, capable of independent operation, is disclosed in publications US 5850988 A and US 5884862 A.

US 2005/006523 A1 discloses an automated radiosonde launcher that includes several launch modules and a control module, which controls the operation of the launch modules. The control module features a controller and tanks for providing the launch modules with the gas necessary for the operation of the launch modules. Each launch module has the utilities for launching a balloon, such as power, inflating gas etc.

### Disadvantages of the prior art

However, significant drawbacks relate to the prior art. A widespread problem with conventional balloon launchers has been their suitability for only a single type of radiosonde. Due to this, for example, progress in radiosonde development has been restricted by the ficult and expensive to alter automatic launchers and those situated in remote locations for a new type of radiosonde. For the same reason, it has not been possible to use a single launcher to launch the radiosondes of more than one manufacturer, which has restricted the diversity of radiosondes that can be launched, making it impossible to select the most suitable product combination from the range of each manufacturer for long periods of unmanned operation.

### Aim of the invention

The present invention is intended to eliminate at least some of the drawbacks of the prior art and to create a launcher equipped with a new type of arrangement, which can be easily adapted to suit a different type of sonde unit. Advantageously, by means of the invention, a launcher is created, by means of which it is possible to launch radiosondes that differ mutually, without making structural changes to the launcher. A second intention of the invention is to create a new type of method for using a single type of launcher to release several different types of radiosondes.

### Summary of the invention

The arrangement according to the invention for a launcher for sonde units comprises at least one sonde case for storing a sonde unit and a generic launch base for receiving the sonde case and releasing the sonde unit by launch means. The arrangement additionally comprises generic means for creating a sonde connection between the launcher and the radiosonde. The sonde case has a generic body, to which the mechanical adapter belonging to the arrangement is arranged to connect in addition to the sonde unit. In addition, the mechanical adapter is arranged to convert the generic launch means of the launch base into meteorological-balloon-specific launch means. The arrangement also comprises an adapter unit, which is arranged to connect to the mechanical adapter, and which is arranged to convert the generic sonde connection into one that is radio-sonde specific. More specifically, the arrangement according to the invention is characterized by what is stated in the characterizing portion of Claim 1.

In the method according to the invention, in order to launch a sonde unit from a generic launch base, the sonde case transporting the sonde unit is brought on a processor to the generic launch base, to which it is connected. The radiosonde is prepared for launching in some handling stage by creating a sonde connection by a control command to the launcher. The control commands to the generic launcher are converted to a suitable form for the radiosonde in the sonde-unit-specific adapter unit. For their part, the release means of the generic launch base are converted to a form suitable for the sonde unit by means of the sonde-unit-specific mechanical adapter of the sonde case. Prior to launching, the meteorological balloon is filled with a filling gas and the sonde unit is launched.

More specifically, the method according to the invention is characterized by what is stated in the characterizing portion of Claim 9.

### Advantages of the invention

Considerable advantages are gained with the aid of the present invention. By adapting the sonde unit to be launched to suit a generic launch base and by using exchangeable adapters for the sonde case, the type of radiosonde used can be changed at low cost. This is because the alterations required to change the type of radiosonde can be made to an adapter only, whereby structural alterations are not required in the generic launcher, or in the body of the sonde case. Thanks to the new type of advantageous adaptability, radiosondes of several different types, or even of several different manufacturers, can be used in a single launcher, thus achieving operational advantages in versatility and cost.

According to one embodiment, thanks to the form fit coupling between the body of the sonde case and the adapter, the adapter is easily and quickly installed in the generic body, which facilitates changes in the type of sonde unit.

According to one embodiment, the sonde-case adapter comprises a mechanical part and a special adapter unit, which is arranged to alter the sonde connection of the launch device to suit the radiosonde. This achieves the advantage that the separate adapter unit of the adapter can be used with several different sonde cases. Thus, cost savings can be made, because the adapter unit that creates the variation in the sonde connection is a relatively expensive component.

### Description of the drawings

In the following, embodiments of the invention are examined with reference to the accompanying drawings.
Figure 1 shows an exploded schematic diagram of the arrangement according to the invention for a sonde-unit launcher.
Figure 2 shows a general view of the launcher according to the invention.
Figure 3 shows a detailed schematic view of an arrangement according to one embodiment in the stage of forming a sonde connection.
Figure 4 shows a detailed schematic view of an arrangement according to one embodiment in the stage of releasing a sonde unit.
Figure 5 shows a schematic view of an arrangement according to one embodiment, in which the mechanical adapter and adapter unit are integrated to form a single component.

### Description of preferred embodiments of the invention

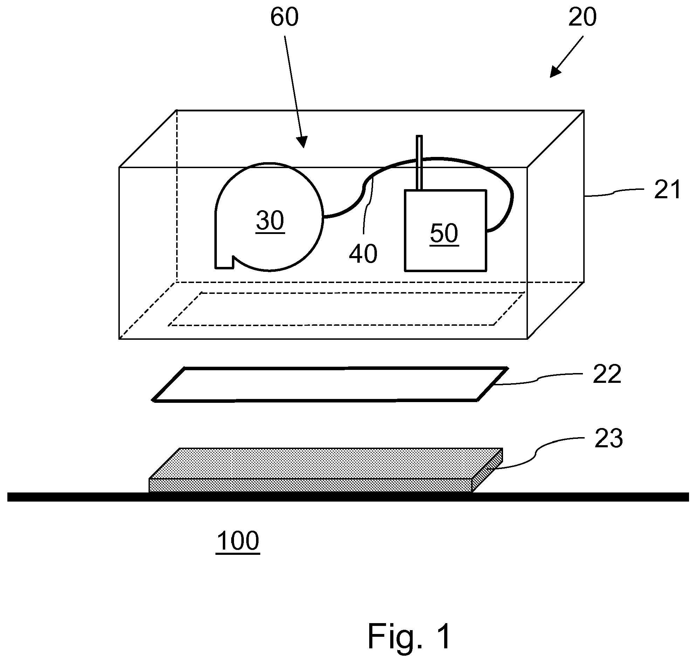

As can be seen from Figure 1, the arrangement according to the invention comprises a sonde case 20, by means of which a sonde unit 60 is transported to the release location and from which the sonde unit 60 is released. The sonde unit 60 comprises a gas fillable meteorological balloon 30, to which a radiosonde 50 for measuring weather conditions is attached by a tether line 40. The sonde case 20 is generic and in terms of its dimensions is designed for use in a specific generic launcher 100. The dimensions of the sonde case 20 are defined according to the sizes of the storage positions for the meteorological balloons 30 to be released, the radiosondes 50, and particularly the launcher. In this connection, the term generic refers to a device, to which no structural alterations must be made when changes are made in the type of sonde unit to be released. In other words, the same sonde-unit case 20 is used in a specific balloon-launcher to handle and launch several different types of sonde units 60.

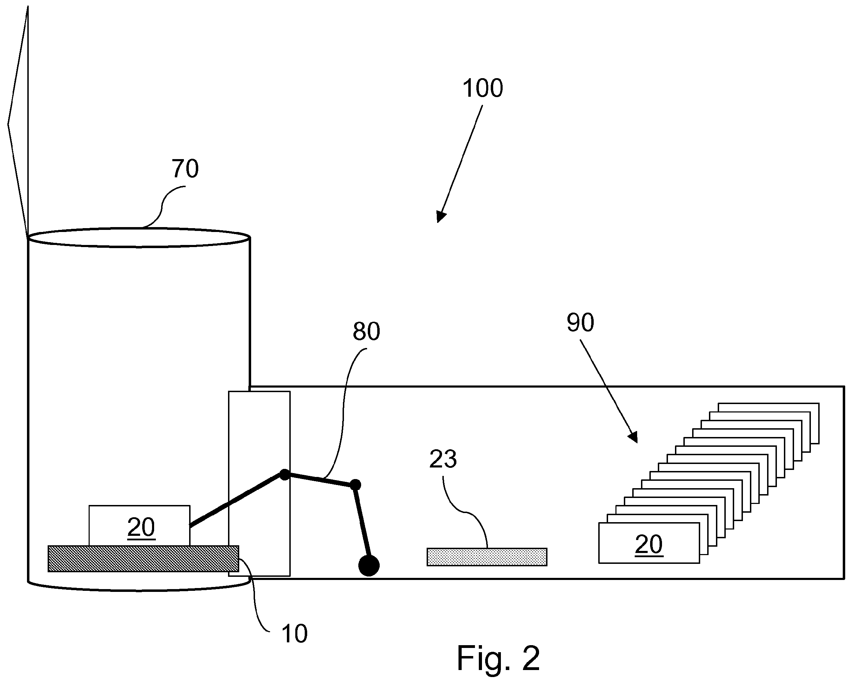

As can be seen from Figure 2, according to one embodiment, the arrangement according to the invention is used in a launcher 100, which comprises a release silo 70 for protecting the launch event from disturbances, such as wind, caused by the environment. In the release silo 70, there is a generic launch base 10, which will be examined hereinafter in greater detail, for launching sonde units. In addition, the launcher 100 includes a store 90, in which there are several storage locations for storing sonde cases 20 and also sonde units 60. It is precisely the size of the storage locations in the store 90 that is one of the factors determining the size of the sonde cases 20, along with the size of the balloon to be launched and the size of the radiosonde 50. In addition, the launcher 100 is equipped with a handling device 80, which is arranged to retrieve the desired sonde case 20 from a specific storage location in the store 90 and to take it to the release silo 70 for launching. The handling device 80 is any device whatever, by means of which the sonde case 20 can be handled and transferred over short distances. According to one embodiment, the handling device 80 is arranged to move between the release silo 70 and the store 90 and thus move sonde cases 20 from the store 90 to the launch base 10. According to one embodiment, the handling device 80 can also act as a store 90, in which case a few sonde cases 20, which thus need not be moved over long distances, can be stored in the handling device 80. According to an example, the handling device 80 is a robot. Alternatively, the sonde cases 20 can be moved manually, if the launcher 100 is a manual device. According to one embodiment, there is a preparation location in the launcher 100 for the radiosonde 50, which is preferably in the portion between the store 90 and the launch base 10, within the reach of the handling device 80. According to one embodiment, the preparation location is equipped with means for creating a sonde connection and with an adapter unit 23, which will be examined in greater detail hereinafter.

In the release silo 70, there is a generic launch base 10, to which the handling device 80 is arranged to bring the sonde case 20 carrying the sonde unit 60 to be launched. The launch base 10 is a device used in the launch of the sonde unit 60, by means of which the meteorological balloon 30 is launched and, according to the figure, it can be installed in a horizontal position, or in some other position. The launcher 100 is equipped with means for creating a sonde connection between the launcher 100 and the sonde unit 60, more specifically the radiosonde 50. The sonde connection can be created at any handling stage of the sonde case 20 whatever, starting from the store 90 and ending at the release silo 70, between the radiosonde 50 and the launcher 100. In this connection, the term sonde connection refers the creation of connections that are required for preparing the radiosonde 50 for a sounding. The means for creating the sonde connection comprise at least conventional control-signal transmission connectors, such as galvanic conductors including their connectors, or for example wireless data-transfer elements. In addition, the means for creating a sonde connection can comprise an operating-voltage connector for starting the radiosonde 50 and communicating with it. Data transfer between the radiosonde 50 and the launcher 100 and control of the radiosonde 50 by means of electrical commands of the launcher 100 are known.

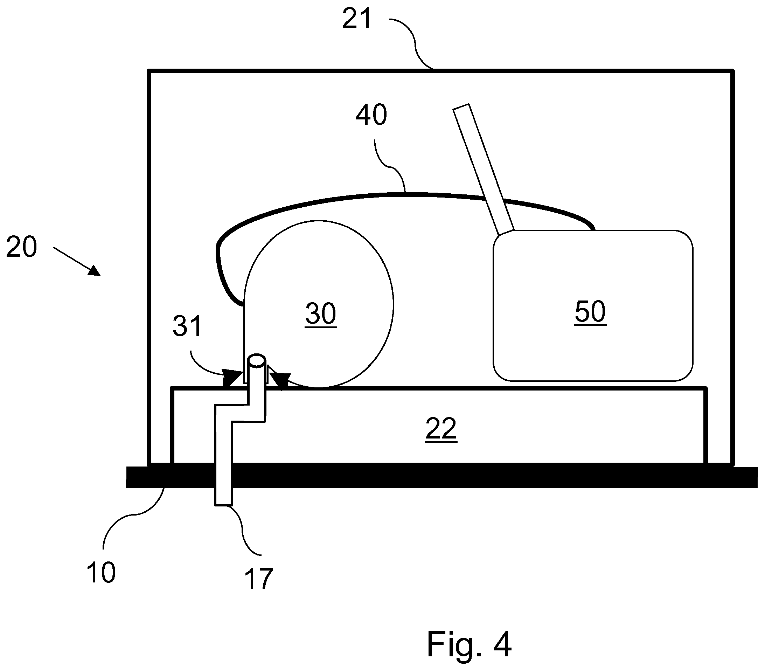

As can be seen from Figure 4, the sonde case 20 comprises a separate body 21 and a sonde-unit-specific mechanical adapter 22. The body 21 is generic, i.e. launcher specific. The adapter 22, on the other hand, is not generic, but instead is arranged to receive the sonde unit 60 to be launched and to connect it to the generic body 21. The task of the mechanical adapter 22 is to attach the sonde unit 60 mechanically to the balloon-launcher 100, or the adapter unit 23, which will be examined in greater detail hereinafter. Thus, the adapter 22 also connects the launch base 10 mechanically to the meteorological balloon 30. The release base 10 is equipped with filling means for the meteorological balloon 30, i.e. with a gas-feed connection 17, through which a gas, such as hydrogen or helium can be led to the meteorological balloon 30, which is held in place. The sonde-case 20 end of the gas-feed connection 17 is preferably equipped with a standardized connector, whereby the sonde case 20 to be installed can be simply pressed into place on the launch base 10. The adapter 22 is thus arranged to receive the gas connection 17 provided by the generic launch base 10 and adapt it to be suitable for use with the filling nozzle of the meteorological balloon 30. The adaptation can also require a change in the position of the gas connection, as shown in Figure 4. One mechanical task of the adapter 22 is to adapt the other launch means of the launch base 10 to suit the meteorological balloon 30. These means are, for instance, a retainer 31, the task of which is to hold the balloon 30 in place during filling, so that the meteorological balloon 30 will not rise off the gas connection 17 by the force of its buoyancy. In general, the main task of the mechanical adapter 22 is to act as an interface between the sonde case 20 and the balloon-launcher 100, or the adapter unit 23, and to adapt the mechanical connections - including the gas connection - of the generic balloon-launcher 100 to suit the sonde unit 60. The mechanical connection task also concerns the radiosonde 50. The mechanical adapter 22 can also act as a point of connection with the handler 80, in which case they will hold onto grab elements (not shown) fitted to the adapter 22.

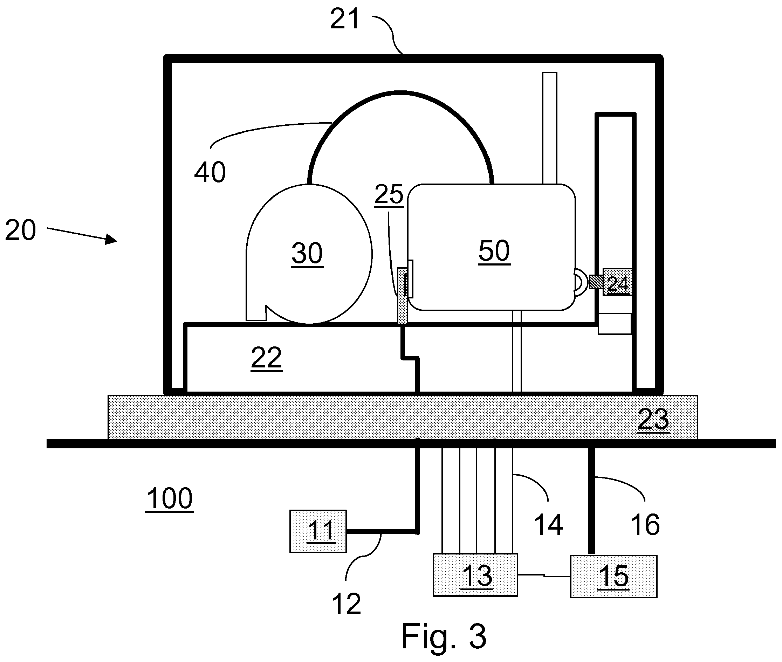

According to one embodiment, the mechanical adapter 22 is also equipped with an actuator 24 (Figure 3), which is arranged to press a starting button on the side of the radiosonde 50. The actuator 24 is located on a vertical protrusion made on one side of the adapter 22. Despite the protrusion, the adapter 22 connects to the body 21 by means of a standardized form fit coupling. The actuator 24 can be, for example, an electrical solenoid, or some other operating element that converts an electrical, hydraulic, or pneumatic signal into movement. The actuator 24 receives its control signal from the adapter unit 23, which converts programmatically the launch command of the launcher 100 into a suitable control signal. Thus, the task of the mechanical adapter 22 is also to make to radiosonde-specific attachment variations compatible with the launcher 100. The adapter 22 is preferably a plate-like part, which can be attached to a corresponding opening in the body 21 of the sonde case 20 by means of a form fit coupling making it easy and quick to install. This naturally requires that the opening in the body 21 receiving the adapter 22 too is generic and that the sonde-unit-specific modifications only affect the adapter 22.

As stated, the launcher 100 comprises means for creating a sonde connection with the radiosonde 50. According to one example these means are located in the portion between the store 90 and the release silo 80, within the reach of the handler 80. According to one embodiment, the said means are located in the launch base 10. According to yet another example the means are located in the store 90. In any event, the means can be connected to the sonde-unit-specific adapter unit 23, as shown in Figure 3. Thus, the interface between the adapter unit 23 and the launcher 100 is preferably standardized, as is the interface between the adapter unit 23 and the mechanical adapter 22. The operation of the adapter unit 23 will be examined in greater detail hereinafter.

As can be seen from Figure 3, the means of the launcher 100 for creating a sonde connection include communications means 13, which are, for example, a bus-controlled processor, from which there is a multichannel output 14. Alternatively, the output of the communication means 13 is wireless and based, for example, on radio frequencies, whereby the radiosonde 50 must naturally also be equipped with wireless communication means, or alternatively is the adapter unit 23 arranged to convert the wireless communication to the wired communication required by the radiosonde 50. If the radiosonde 50 has wireless communications means, the adapter unit 23 between the communications means 13 and the radiosonde 50 can be even only a device, such as a processor, capable of signalprocessing methods. The launcher 100 has preferably capabilities for communicating both wirelessly and by means of a galvanic connection. According to one embodiment, the communications connection between the launcher 100 and the radiosonde 50 can be made optically, in which case the communications means 13 of the launcher 100 will be equipped with an optical communications port 15, in which there is an optical output 16. At its simplest, the optical output 16 is a light guide led to the outside of the launcher 100, i.e. the surface facing the sonde case 20. Of course, the optical output 16 can also be led to some other surface of the sonde case by means of the mechanical adapter 22. In addition, there can be an operating-voltage input 12 in the launcher 100, which can be an arrangement based on a galvanic connection, for charging the battery of the radiosonde 50, or for some other need. The voltage input 12 is connected to the voltage generator 11 of the launcher 100, which can be, for example, a transformer, from which the operating voltage can be drawn. The voltage generator 11 can also be some voltage-conversion unit, such as a switched-mode current supply, which provides a sufficiently high voltage and current to all the sonde units. Alternatively, in the adapter unit 23 in Figure 3 there can be a voltage converter, such as a transformer or switched-mode power supply, for providing a suitable voltage and current to each sonde 50. The operating voltage can be transmitted from the launch base to the adapter 22, for example, by galvanic contact surfaces, analogously to communications-devices' batteries.

In general, the launcher 100 is equipped with means for creating a sonde connection, the creation of which sonde connection being known without the variations according to the invention.

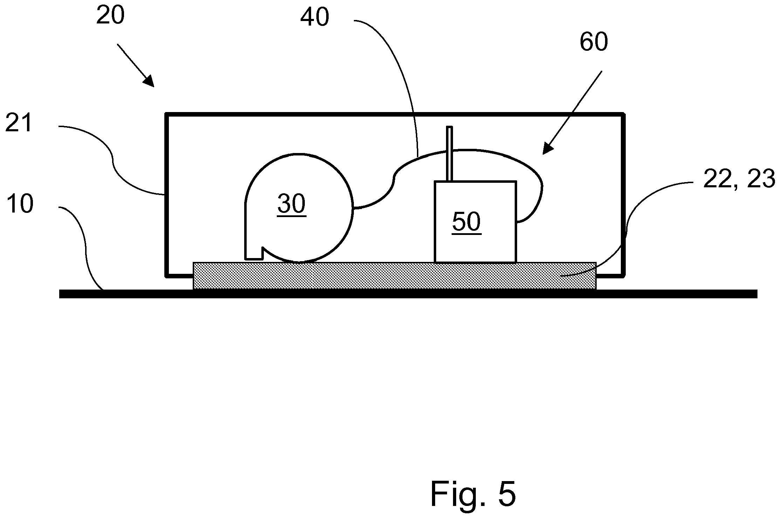

The adapter unit 23 is arranged to adapt the generic sonde connection of the launcher 100 to suit the radiosonde 50. The same adapter unit 23 according to the invention can be used many times in the same sonde case 20, which results in clear cost savings, as the adapter unit 23 contains relatively expensive modulation technology. In this case, the actual adapter 22 acts as a mechanical connector, which on the one hand connects the adapter unit 23 to the body 21 and on the other hand connects the launch base 10 to the sonde unit 60. Alternatively, the adapter unit 23 can be integrated as part of the mechanical adapter 22 (Figure 5), in which case said integrated adapter performs both mechanical and data-transfer adaptation. The adapter unit 23 receives operating voltage of the operating voltage input 12 of the voltage generator 11 and converts it and leads it to suit the radiosonde 50. Likewise, the adapter unit 23 is arranged to receive the 5-pin output 14 of the communications means 13 and convert it to suit the 2-pin connector of the radiosonde 50. In addition, the adapter unit 23 performs conversion for the control signal carried by the output 14, which converts, for example, the generic control commands, given by the launch base 10, to be compatible with the radiosonde 50. Thus, according to the example described, the adapter unit 23 is equipped with a transformer, a conversion processor, and a connector compatible with the radiosonde 50. The adapter unit 23 according to the invention creates a sonde connection when the sonde case 20 is in an intermediate store, for example, as shown in Figure 3. Said intermediate store can be, for example, a queue-like buffer store, in which the sonde cases 20 await their turn for launching, which requires the waiting location to be equipped with the means required by the sonde connection. A ready assembled sonde case 20, in which there is a body 21 and a mechanical adapter 22 connected to it, to which the sonde unit 60 to be launched is attached, can be brought to the intermediate store. The ready assembled sonde case 20 is pressed into place on top of the adapter unit 23, whereby it is preferable for the interface between the adapter unit 23 and the mechanical adapter 22 to be standardized and such that the connection will succeed by simple pressing the sonde case 20 into place, whereby the installation can be reliably made, for example, by a robot 80. Alternatively, in this connection, the sonde case 20 can be equipped with the radiosonde 50, meteorological balloon 30, or both, to be launched. The adapter 22 of the sonde case can then also be equipped with an adapter unit 23, in which case one or more of the components of the sonde case 20 are sub-assembled prior to launch.

According to one example the adapter unit 23 creates a sonde connection between the launcher 100 and the radiosonde 50 while the sonde case 20 is secured to the release base 10. According to a second example the adapter unit 23 arranges the sonde connection, when the sonde case 20 is in the store 90, in which case the radiosonde 50 can be prepared for sounding while it is best protected from the weather.

One important task of the adapter unit 23 is to convert the control commands of the launcher 100 into a control language understood by each type of sonde 50, or correspondingly by different sondes 50 of different manufacturers. These control commands typical include commands relating to the preparation of the radiosonde 50, such as the initiation of communications between the radiosonde 50 and the launcher 100, switching on the power of the radiosonde, setting the correct transmission frequency, reading information - such as diagnostics information - and, for example, calibration.

**List of reference numbers**

| Reference number | Component | Reference number | Component |
|---|---|---|---|
| 10 | launch base | 23 | adapter unit |
| 11 | voltage generator | 24 | actuator |
| 12 | operating-voltage input | 25 | operating-voltage connector |
| 13 | communications means | 30 | meteorological balloon |
| 14 | (galvanic) output | 40 | tethering line |
| 15 | optical communications port | 50 | radiosonde |
| 16 | optical output | 70 | release silo |
| 17 | gas-feed connection | 80 | handling device |
| 20 | sonde case | 90 | store |
| 21 | body | 100 | launcher |
| 22 | mechanical adapter | | |

## Claims

1. Arrangement for a launcher (100) for launching sonde units (60), which each include a meteorological-balloon (30) and a radiosonde (50), which arrangement comprises:
- at least one sonde case (20) for storing and transporting a sonde unit (60), which sonde case (20) has a generic body (21);
- a generic launch base (10) for receiving the at least one sonde case (20) carrying the sonde unit (60) to the launch base (10), which has means for launching a sonde unit (60); and
- generic means for creating a sonde connection between the launcher (100) and the radiosonde (50) of the sonde unit (60) for preparing the radiosonde (50) for sounding,
**characterized in that**
- the arrangement further comprises a mechanical adapter (22), which is arranged to connect to the generic body (21) and the sonde unit (60), and which is arranged to convert the generic launch means of the launch base (10) to become meteorological-balloon and sonde-specific, and that
- the arrangement also comprises an adapter unit (23), which is arranged to connect to the mechanical adapter (22), and which is arranged to convert the sonde connection to be radiosonde-specific.

2. Arrangement according to Claim 1,
**characterized in that**
the mechanical adapter (22) and adapter unit (23) are a single integrated component, which is arranged to be connected to the body (21) of the sonde case (20).

3. Arrangement according to Claim 1 or 2,
**characterized in that**
the generic body (21) is arranged to connect to the adapter (22) by means of a form fit coupling.

4. Arrangement according to Claim 1, 2, or 3,
**characterized in that**
the launcher (100) is equipped with network-communications means for creating a remote connection, whereby new software can be downloaded to the means for for creating a sonde-connection between the launcher (100) and the radiosonde (50) of the sonde unit (60).

5. Arrangement according to any of Claims 1 - 4,
**characterized in that**
the means for creating a sonde connection between the launcher (100) and the radiosonde (50) of the sonde unit (60) comprise means for creating a wireless communications connection to the radiosonde (50).

6. Arrangement according to any of the above Claims,
**characterized in that**
the means for creating a sonde connection between the launcher (100) and the radiosonde (50) of the sonde unit (60) comprise means (15, 16) for creating an optical communications connection to the radiosonde (50).

7. Arrangement according to any of the above Claims,
**characterized in that**
the launcher (100) comprises a preparation location for the radiosonde (50), the preparation location comprising the means for creating a sonde connection between the launcher (100) and the radiosonde (50) of the sonde unit (60).

8. Arrangement according to any of the above Claims,
**characterized in that**
the launch base (10) comprises the means for creating a sonde connection between the launcher (100) and the radiosonde (50) of the sonde unit (60).

9. Method for launching a sonde unit (60) from a generic launcher (100), in which method:
- a sonde case (20) transporting the sonde unit (60) is brought to the generic launch base (10) by a handler (80);
- the sonde case (20) is connected to the launch base (10);
- the radiosonde (50) is prepared for launch by creating a sonde connection by control commands of the launcher (100);
- the meteorological balloon (30) is filled with a filling gas; and
- the sonde unit (60) is launched,
**characterized in that**
- the generic launcher's (100) control commands are converted to a form suitable to the radiosonde (50) in a sonde-unit-specific adapter unit (23), and that
- the launch means of the generic launch base (10) are converted to a form suitable to the sonde unit (60) by means of the sonde-unit-specific mechancial adapter (22) of the sonde case (20).

10. Method according to Claim 9,
**characterized in that**
the control commands of the generic launcher (100) are converted to a form suitable to the radiosonde (50) in the sonde-unit-specific adapter unit (23) prior to the connection of the sonde case (20) to the launch base (10).

11. Method according to Claim 9,
**characterized in that**
the control commands of the generic launcher (100) are converted to a form suitable to the radiosonde (50) in the sonde-unit-specific adapter unit (23) when the sonde case (20) is connected to the launch base (10).

12. Method according to any of Claims 9 - 11,
**characterized in that**
the voltage of the operating-voltage output (12) of the generic launcher (100) is converted to the magnitude of the operating voltage of the radiosonde (50) in the sonde-unit-specific adapter (22) of the sonde case (20).

13. Method according to any of Claims 9 - 12,
**characterized in that**
the current or other switch of the radiosonde (50) is operated by means of an actuator (24) of the adapter (22).

## Patentansprüche

1. Anordnung für einen Starter (100) zum Starten von Sondeneinheiten (60), die jeweils einen Wetterballon (30) und eine Radiosonde (50) umfassen, wobei die Anordnung umfasst:
- mindestens ein Sondengehäuse (20) zum Aufbewahren und Transportieren einer Sondeneinheit (60), wobei das Sondengehäuse (20) einen generischen Körper (21) aufweist;
- eine generische Startbasis (10) zum Aufnehmen des mindestens einen Sondengehäuses (20), das die Sondeneinheit (60) zur Startbasis (10) transportiert, die Mittel zum Starten einer Sondeneinheit (60) aufweist; und
- generische Mittel zum Erzeugen einer Sondenverbindung zwischen dem Starter (100) und der Radiosonde (50) der Sondeneinheit (60) zum Vorbereiten der Radiosonde (50) auf das Sondieren,
**dadurch gekennzeichnet, dass**,
- die Anordnung weiter einen mechanischen Adapter (22) umfasst, der ausgeführt ist, mit dem generischen Körper (21) und der Sondeneinheit (60) verbunden zu werden, und der ausgeführt ist, die generischen Startmittel der Startbasis (10) derart umzuwandeln, dass sie zu einem Wetterballon und sondenspezifisch werden, und dass
- die Anordnung zudem einen Adapter (23) umfasst, der ausgeführt ist, mit dem mechanischen Adapter (22) verbunden zu werden, und der ausgeführt ist, die Sondenverbindung umzuwandeln, sodass sie radiosondenspezifisch ist.

2. Anordnung nach Anspruch 1,
**dadurch gekennzeichnet, dass**,
der mechanische Adapter (22) und die Adaptereinheit (23) eine einzelne integrierte Komponente sind, die ausgeführt ist, mit dem Körper (21) des Sondengehäuses (20) verbunden zu werden.

3. Anordnung nach Anspruch 1 oder 2,
**dadurch gekennzeichnet, dass**,
der generische Körper (21) ausgeführt ist, mit dem Adapter (22) mittels einer Formschlusskopplung verbunden zu werden.

4. Anordnung nach Anspruch 1, 2 oder 3,
**dadurch gekennzeichnet, dass**,
der Starter (100) mit Netzwerkkommunikationsmitteln zum Erzeugen einer Remoteverbindung ausgestattet ist, wobei neue Software zum Erzeugen einer Sondenverbindung zwischen dem Starter (100) und der Radiosonde (50) der Sondeneinheit (60) auf die Mittel heruntergeladen werden kann.

5. Anordnung nach einem der Ansprüche 1 bis 4,
**dadurch gekennzeichnet, dass**,
die Mittel zum Erzeugen einer Sondenverbindung zwischen dem Starter (100) und der Radiosonde (50) der Sondeneinheit (60) Mittel zum Herstellen einer drahtlosen Kommunikationsverbindung mit der Radiosonde (50) umfassen.

6. Anordnung nach einem der vorstehenden Ansprüche,
**dadurch gekennzeichnet, dass**,
die Mittel zum Herstellen einer Sondenverbindung zwischen dem Starter (100) und der Radiosonde (50) der Sondeneinheit (60) Mittel (15, 16) zum Herstellen einer optischen Kommunikationsverbindung mit der Radiosonde (50) umfassen.

7. Anordnung nach einem der vorstehenden Ansprüche,
**dadurch gekennzeichnet, dass**,
der Starter (100) einen Vorbereitungsort für die Radiosonde (50) umfasst, wobei der Vorbereitungsort die Mittel zum Herstellen einer Sondenverbindung zwischen dem Starter (100) und der Radiosonde (50) der Sondeneinheit (60) umfasst.

8. Anordnung nach einem der vorstehenden Ansprüche,
**dadurch gekennzeichnet, dass**,
die Startbasis (10) die Mittel zum Herstellen einer Sondenverbindung zwischen dem Starter (100) und der Radiosonde (50) der Sondeneinheit (60) umfasst.

9. Verfahren zum Starten einer Sondeneinheit (60) von einem generischen Starter (100), wobei bei dem Verfahren:
- ein Sondengehäuse (20), das die Sondeneinheit (60) transportiert, durch eine Handhabevorrichtung (80) zu der generischen Startbasis (10) gebracht wird;
- das Sondengehäuse (20) mit der Startbasis (10) verbunden wird;
- die Radiosonde (50) für das Starten durch Herstellen einer Sondenverbindung mittels Steuerbefehlen des Starters (100) vorbereitet wird;
- der Wetterballon (30) mit einem Füllgas gefüllt wird; und
- die Sondeneinheit (60) gestartet wird,
**dadurch gekennzeichnet, dass**,
- die Steuerbefehle des generischen Starters (100) in eine Form umgewandelt werden, die für die Radiosonde (50) in einer sondeneinheitsspezifischen Adaptereinheit (23) geeignet ist, und dass
- die Startmittel der generischen Startbasis (10) mittels des sondeneinheitsspezifischen mechanischen Adapters (22) des Sondengehäuses (20) in eine Form umgewandelt werden, die für die Sondeneinheit (60) geeignet ist.

10. Verfahren nach Anspruch 9,
**dadurch gekennzeichnet, dass**,
die Steuerbefehle des generischen Starters (100) vor der Verbindung des Sondengehäuses (20) mit der Startbasis (10) in eine Form umgewandelt werden, die für die Radiosonde (50) in der sondeneinheitsspezifischen Adaptereinheit (23) geeignet ist.

11. Verfahren nach Anspruch 9,
**dadurch gekennzeichnet, dass**,
die Steuerbefehle des generischen Starters (100) in eine Form umgewandelt werden, die für die Radiosonde (50) in der sondeneinheitsspezifischen Adaptereinheit (23) geeignet ist, wenn das Sondengehäuse (20) mit der Startbasis (10) verbunden wird.

12. Verfahren nach einem der Ansprüche 9 bis 11,
**dadurch gekennzeichnet, dass**,
die Spannung des Betriebsspannungsausgangs (12) des generischen Starters (100) in die Größenordnung der Betriebsspannung der Radiosonde (50) in dem sondeneinheitsspezifischen Adapter (22) des Sondengehäuses (20) umgewandelt wird.

13. Verfahren nach einem der Ansprüche 9 bis 12,
**dadurch gekennzeichnet, dass**,
der Strom- oder andere Schalter der Radiosonde (50) mittels eines Betätigungsorgans (24) des Adapters (22) betätigt wird.

## Revendications

1. Aménagement pour un lanceur (100) pour lancer des unités de sonde (60), qui comprennent chacune un ballon météorologique (30) et une radiosonde (50), lequel aménagement comprend :
- au moins un boîtier de sonde (20) pour stocker et transporter une unité de sonde (60), lequel boîtier de sonde (20) a un corps générique (21) ;
- une base de lancement générique (10) pour recevoir le au moins un boîtier de sonde (20) portant l'unité de sonde (60) à la base de lancement (10), qui a des moyens pour lancer une unité de sonde (60) ; et
- des moyens génériques pour créer une connexion de sonde entre le lanceur (100) et la radiosonde (50) de l'unité de sonde (60) afin de préparer la radiosonde (50) pour le sondage,
**caractérisé en ce que** :
- l'aménagement comprend en outre un adaptateur mécanique (22) qui est aménagé pour se raccorder au corps générique (21) et à l'unité de sonde (60) et qui est aménagé pour convertir les moyens de lancement génériques de la base de lancement (10) afin qu'il devienne un ballon météorologique spécifique à la sonde et **en ce que** :
- l'aménagement comprend également une unité d'adaptateur (23) qui est aménagée pour se raccorder à l'adaptateur mécanique (22) et qui est aménagée pour convertir la connexion de sonde pour qu'elle soit spécifique à la radiosonde.

2. Aménagement selon la revendication 1,
**caractérisé en ce que** :
l'adaptateur mécanique (22) et l'unité d'adaptateur (23) constituent un seul composant intégré qui est aménagé pour être raccordé au corps (21) du boîtier de sonde (20).

3. Aménagement selon la revendication 1 ou 2,
**caractérisé en ce que** :
le corps générique (21) est aménagé pour se raccorder à l'adaptateur (22) au moyen d'un couplage d'ajustement de formes.

4. Aménagement selon la revendication 1, 2 ou 3,
**caractérisé en ce que** :
le lanceur (100) est équipé de moyens de communications par réseau pour créer une connexion à distance, dans lequel un nouveau logiciel peut être téléchargé sur les moyens utilisés pour créer une connexion de sonde entre le lanceur (100) et la radiosonde (50) de l'unité de sonde (60).

5. Aménagement selon l'une quelconque des revendications 1 à 4,
**caractérisé en ce que** :
les moyens permettant de créer une connexion de sonde entre le lanceur (100) et la radiosonde (50) de l'unité de sonde (60) comprennent des moyens pour créer une connexion de communications sans fil avec la radiosonde (50).

6. Aménagement selon l'une quelconque des revendications précédentes,
**caractérisé en ce que** :
les moyens permettant de créer une connexion de sonde entre le lanceur (100) et la radiosonde (50) de l'unité de sonde (60) comprennent des moyens (15, 16) pour créer une connexion de communications optique avec la radiosonde (50).

7. Aménagement selon l'une quelconque des revendications précédentes,
**caractérisé en ce que** :
le lanceur (100) comprend un emplacement de préparation pour la radiosonde (50), l'emplacement de préparation comprenant les moyens permettant de créer une connexion de sonde entre le lanceur (100) et la radiosonde (50) de l'unité de sonde (60).

8. Aménagement selon l'une quelconque des revendications précédentes,
**caractérisé en ce que** :
la base de lancement (10) comprend les moyens permettant de créer une connexion de sonde entre le lanceur (100) et la radiosonde (50) de l'unité de sonde (60).

9. Procédé de lancement d'une unité de sonde (60) à partir d'un lanceur générique (100), dans lequel procédé :
- un boîtier de sonde (20) transportant l'unité de sonde (60) est amené à la base de lancement générique (10) par un manipulateur (80) ;
- le boîtier de sonde (20) est raccordé à la base de lancement (10) ;
- la radiosonde (50) est préparée pour un lancement en créant une connexion de sonde par des commandes du lanceur (100) ;
- le ballon météorologique (30) est rempli d'un gaz de remplissage ; et
- l'unité de sonde (60) est lancée,
**caractérisé en ce que** :
- les commandes de réglage du lanceur générique (100) sont converties sous une forme convenant à la radiosonde (50) dans une unité d'adaptateur spécifique à l'unité de sonde (23) et **en ce que** :
- les moyens de lancement de la base de lancement générique (10) sont convertis sous une forme convenant à l'unité de sonde (60) au moyen de l'adaptateur mécanique spécifique à l'unité de sonde (22) du boîtier de sonde (20).

10. Procédé selon la revendication 9,
**caractérisé en ce que** :
les commandes de réglage du lanceur générique (100) sont converties sous une forme convenant à la radiosonde (50) dans l'unité d'adaptateur spécifique à l'unité de sonde (23) avant la connexion du boîtier de sonde (20) avec la base de lancement (10).

11. Procédé selon la revendication 9,
**caractérisé en ce que** :
les commandes de réglage du lanceur générique (100) sont converties sous une forme convenant à la radiosonde (50) dans l'unité d'adaptateur spécifique à l'unité de sonde (23) lorsque le boîtier de sonde (20) est raccordé à la base de lancement (10).

12. Procédé selon l'une quelconque des revendications 9 à 11,
**caractérisé en ce que** :
la tension de la sortie de tension de fonctionnement (12) du lanceur générique (100) est convertie en grandeur de la tension de fonctionnement de la radiosonde (50) dans l'adaptateur spécifique à l'unité de sonde (22) du boîtier de sonde (20).

13. Procédé selon l'une quelconque des revendications 9 à 12,
**caractérisé en ce que** :
le commutateur de courant ou un autre commutateur de la radiosonde (50) est actionné au moyen d'un actionneur (24) de l'adaptateur (22).
